# EUROPÄISCHE PATENTSCHRIFT

(11) **EP 2 121 493 B1**
(45) Veröffentlichungstag und Bekanntmachung des Hinweises auf die Patenterteilung: **31.10.2012**
(21) Anmeldenummer: 08734370.3
(22) Anmeldetag: 12.03.2008
(51) Int. Cl.: B65G 49/06

(54) **VORRICHTUNG UND VERFAHREN ZUM AUTOMATISCHEN SORTIEREN VON GLASPLATTEN**
DEVICE AND PROCESS FOR AUTOMATICALLY SORTING GLASS PLATES
DISPOSITIF ET PROCEDE DE TRI AUTOMATIQUE DE PLAQUES DE VERRE

(30) Priorität: 16.03.2007 DE 102007012814
(43) Veröffentlichungstag der Anmeldung: 25.11.2009
(73) Patentinhaber: Grenzebach Maschinenbau GmbH, 86663 Asbach-Bäumenheim (DE)
(72) Erfinder: STRASS, Manfred, 86655 Harburg (DE)
(74) Vertreter: Kindermann, Peter
(86) Internationale Anmeldenummer: PCT/DE2008/000430
(87) Internationale Veröffentlichungsnummer: WO 2008/113324

(56) Entgegenhaltungen:
- DE-A1-102004 057 228
- FR-A- 2 272 007
- JP-A- 9 012 146
- US-A- 3 907 127
- US-A1- 2006 163 035

## Beschreibung

Flachglas, das zu Fensterscheibe oder Autoscheiben verarbeitet wird, ist trotz seiner allgegenwärtigen Selbstverständlichkeit, einer der erstaunlichsten Werkstoffe unserer Zeit. Im Unterschied zu Hohlglas hat es einige Jahrtausende länger gedauert, bis es den Glasmachern im Mittelalter gelang, flache Glastafeln zu erzeugen, die für Fenster verwendet werden konnten.

Die Entwicklung des so genannten Floatglasverfahrens im Jahre 1959 war der bislang letzte Meilenstein in der Flachglasherstellung. "Float" bedeutet soviel wie obenauf schwimmen oder treiben. Das Neuartige am Float - Verfahren besteht in dem so genannten "Float - Band". Es besteht aus geschmolzenem Zinn. Dieses Zinnbad ist etwa 4 bis 8 Meter breit und bis zu 60 Meter lang. Bei diesem Verfahren schwimmt das flüssige Glas auf dem ideal ebenen flüssigen Zinn. Wenn die Glasmasse aus dem Schmelzofen auf das Zinnbad gezogen wird, hat das Zinn eine Temperatur von 1000 °C. Am Ende des Zinnbades, wenn das jetzt erstarrte Glasband die Zinnwanne verlässt, liegt die Temperatur des Zinns bei 600°C. Zinn ist das einzige Metall, das die für dieses Verfahren notwendigen Voraussetzungen erfüllt, bei 600°C bereits flüssig zu sein und bei 1000°C noch keinen störenden Dampfdruck zu entwickeln.

Nachdem das erstarrte Glasband nach dem Verlassen der Zinnwanne in die benötigten Formate unterteilt wurde, müssen die so erhaltenen Glasflächen für den Weitertransport gestapelt werden.

Aus der US 3 178 041 ist eine Vorrichtung zum Transport von aufeinander folgenden Platten bekannt, bei der diese auf einem Beförderungsband sich bewegenden Platten von einem über dem Band angebrachten Bauteil mittels eines Vakuums angehoben und über geneigte Beförderungsmitteln zu einer Seite des Bandes befördert werden. Desgleichen werden von einem weiteren Bauteil mittels eines Vakuums Platten angehoben und über geneigte Beförderungsmittel zu der anderen Seite des Bandes befördert.

Hierbei handelt es sich bei dem Stand der Technik, von dem hier ausgegangen wird, um Glasplatten, die von Transportarbeitern mittels bestimmter, auf der Basis einer Vakuumtechnik funktionierenden, Werkzeuge mit der Hand erfasst und auf den beiden Seiten eines Transportbandes verteilt werden. Da diese Arbeit beständig eine Anzahl von Arbeitern erfordert, lag der US 3 178 041 deshalb die Aufgabe zugrunde, den gewünschten Vorgang automatisch zu erledigen.

Dieser Stand der Technik kennzeichnet lediglich den Beginn der Entwicklung vom manuellen Stapeln flächiger Güter hin zu einer maschinellen Bearbeitung dieser Aufgabe.

Aus der DE 199 35 665 A1 ist, nach den Angaben im Anspruch 1, eine Vorrichtung zum Aufeinanderschichfien von flächigen Gütern, insbesondere von Blechtafeln, auf mehrere, hintereinander liegende Stapelorte bekannt. Diese Vorrichtung weist eine, die Güter zueinander überlappungsfrei hintereinander liegend anliefernde, als Überkopfeinrichtung ausgebildete, eine schaltbare Güter - Halteinrichtung aufweisende, kombinierte Transport - Ablageeinrichtung zur Zuführung der Güter zu den Stapelorten auf, wobei die Transport - Ablageeinrichtung mittels einer Steuereinrichtung von einer Transportgeschwindigkeit auf eine Ablagegeschwindigkeit herunterfahrbar ist. Weiter wird beansprucht, dass bei, beziehungsweise nach Erreichen der Ablagegeschwindigkeit die Abgabe des jeweiligen Guts erfolgt, wobei mittels der Steuereinrichtung wahlweise der Bremsvorgang bezogen auf einen der Stapelorte erfolgt oder keine Abbremsung vorgenommen wird, wenn das Gut über mindestens einen der Stapelorte hinweggefördert und zu dem folgenden oder einem der folgenden Stapelorte transportiert sowie dort abgebremst und dort abgelegt wird.

Dieser Vorrichtung liegt die Aufgabe zugrunde, eine Vorrichtung zum Stapeln flächiger Güter zu schaffen, die bei hoher Flexibilität und größtmöglicher Güterschonung eine präzise und reproduzierbare Ablage ermöglicht, schnell und präzise arbeitet und ein geringes Bauvolumen aufweist.

Eine Verwendung dieser bekannten Vorrichtung zum Stapeln von Glasplatten ist offensichtlich nicht möglich.

Aus der DE 10 2004 057 228 A1 ist dagegen ein Verfahren und eine Vorrichtung zum Stapeln von auf einem Platfienförderer herangeführten Platten, insbesondere Glasplatten, mit hoher Geschwindigkeit, bekannt, dem die Aufgabe zugrunde liegt, eine Möglichkeit zur schnelleren Stapelung solcher Platten zu ermöglichen.

Zur Lösung dieser Aufgabe wird im Verfahren nach Anspruch 1 beansprucht, dass an einer Stapelstation die jeweilige Platte durch Erzeugen eines Saugdrucks an der Plattenoberseite etwas vom Plattenförderer abgehoben, sodann unter Beibehaltung des auf die Plattenoberseite wirkenden Saugdrucks ebenfalls an der Plattenoberseite reibschlüssig oder anderweitig erfasst und vom Plattenförderer weg an eine Position über einem Stapeltisch bewegt und dort durch Lösen des Saugdrucks und / oder durch mechanischen Druck auf die Plattenoberseite entgegen der Wirkung der Saugkraft auf dem Plattentisch abgelegt wird, wobei der Stapeltisch nach Ablegen jeder Platte um eine Plattendicke abgesenkt wird.

Das im Anspruch 1 der DE 10 2004 057 228 A1 beschriebene Verfahren und die im Anspruch 2 beanspruchte Vorrichtung gehen im Wesentlichen nicht über den bereits geschilderten Stand der Technik hinaus.

Weiter ist aus der US 2006/163035 A1 eine Vorrichtung und ein Verfahren zum Ausrichten von flachen Gegenständen bekannt. Bei dieser Vorrichtung sind zwei parallel laufende Bänder vorgesehen, die mit unterschiedlicher Geschwindigkeit betrieben werden können.

Aus der EP 1 498 370 A1 ist ferner eine Vorrichtung zum Transportieren und Drehen eines Gegenstandes bekannt, die in einer Auflageebene angeordnete Mittel zur Auflage des Gegenstandes aufweist, wobei diese Mittel Längs- und Drehförderer aufweisen.

Zum Stapeln von Glasplatten sind die Vorrichtungen aus der US 2006/163035 A1 und der EP 1 498 370 A1 jedoch nicht geeignet.

Die FR 2 272 007 A betrifft eine Vorrichtung und ein Verfahren zum Transport und zur Beförderung von plattenförmigen Materialien mit Mitteln zur Bewegung und minimalen Richtungsänderung auf einen Ausgang hin.

Die JP 09 012146A betrifft eine Vorrichtung zum Stapeln von Glasplatten mit besonderen Mitteln zum Greifen der Glasplatten.

Die US 3 907 127 A betrifft eine Stapelvorrichtung mit einem Beförderungsmittel auf der Basis einer Vakuumerfassung von Glasplatten.

Aus der DE 43 38 981 C2 ist eine Einrichtung zum Schichten von Platten bekannt, in denen jeweils wenigstens zwei Führungslöcher definiert sind, wobei jede Platte an einer vorgegebenen, ausgerichteten Position angeordnet wird.

Als Stapelvorrichtung für Glasplatten ist eine derartige Anordnung jedoch nicht geeignet.

Weiter ist aus der DE 602 01 027 T2 eine Vorrichtung zur Handhabung und Positionierung von Trennelementen in Stapeln aus vertikal angeordneten flachen Elementen bekannt. Für das Stapeln von Glasplatten unterschiedlicher Formate ist diese Vorrichtung wegen der Empfindlichkeit von Glasplatten nicht geeignet.

Deshalb liegt der vorliegenden Anmeldung die Aufgabe zugrunde, eine Vorrichtung, bzw. ein Verfahren anzugeben, die das Stapeln von Glasplatten unterschiedlicher Formate automatisch in etwa mit der Geschwindigkeit ihrer Erzeugung bei größtmöglicher Bruchsicherheit ermöglichen.

Diese Aufgabe wird mit den Merkmalen der Ansprüche 1, bzw. dem Verfahren nach Anspruch 13 gelöst.

Im Wesentlichen wird dies durch die spezielle Ausgestaltung von drei gesonderten, jedoch eine einheitliche Gesamtwirkung entfaltenden, Vorrichtungen ermöglicht, nämlich:
1. der Ausrichtvorrichtung ( 1 )
2. der Stapelvorrichtung ( 2 ), und
3. dem Hochkantsteller ( 3 ).

Ein Glasofen liefert ein Glasband unterschiedlicher Dicke etwa mit einer Geschwindigkeit von 30 Metern pro Minute. Die minimale verarbeitbare Glasstärke beträgt etwa 1,6 mm, gut zu bearbeiten sind etwa 6mm, erreichbar sind 10 mm. Je dünner das Glas ist, desto größer ist hierbei die Geschwindigkeit des Glasbands.

Das Glasband wird sodann in die gewünschten Formate unterteilt und über eine linienförmige, einem Förderband ähnliche, Struktur entsprechend den unterschiedlichen Formaten sortiert, zu Stapeln geordnet, von einem Roboterarm erfasst und der weiteren Verarbeitung zugeführt. Bruchglas wird automatisch erkannt und ausgesondert.
Im Stapelmode vermag die erfindungsgemäße Anlage eine Verarbeitungsgeschwindigkeit von etwa 100 Metern pro Minute zu erreichen.

Im Folgenden wird die erfindungsgemäße Vorrichtung näher beschrieben:

Es zeigen im Einzelnen:
Figur 1: einen detaillierten Querschnitt der erfindungsgemäßen Vorrichtung
Figur 2: eine detaillierte Draufsicht der erfindungsgemäßen Vorrichtung
Figur 3:eine Draufsicht und einen Querschnitt der Ausrichtvorrichtung ( 1 )
Figur 4: eine Draufsicht zur Funktionsdarstellung der Ausrichtvorrichtung ( 1 )
Figur 5: einen Querschnitt der Stapeleinheit ( 2 ) in Längsrichtung
Figur 6: eine Schnittzeichnung der Stapeleinheit ( 2 ) quer zur Längsrichtung
Figur 7: zwei Funktionsprinzipien zur Luftansaugung in der Stapeleinheit ( 2 )
Figur 8: eine Draufsicht und einen Querschnitt des Hochkantstellers ( 3 )
Figur 9: Darstellung von Details zum Hochkantsteller ( 3 )

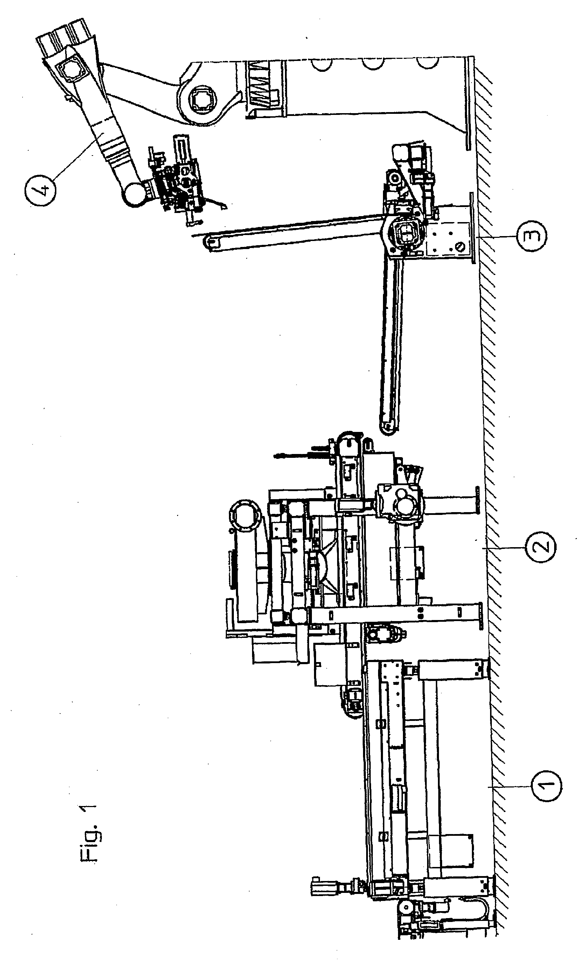

In der Figur 1 ist die erfindungsgemäße Vorrichtung als Schnittzeichnung in der Seitenansicht dargestellt. Auf der linken Seite dieser Vorrichtung trifft das Glasband auf die Ausrichtvorrichtung ( 1 ). Entsprechende Anlageteile der so genannten Kaltlinie, den Verarbeitungsweg des erkalteten Glasmaterials nach dem Verlassen des Glasofens sind in der Figur 1 nicht dargestellt.

Vor dem Erreichen der Ausrichtvorrichtung ( 1 ) wird das Glasband entsprechend den Kundenanforderungen in die gewünschten Formate unterteilt und in der Ausrichtvorrichtung ( 1 ) an dem linken und / oder rechten Anschlagband ( 7 ) ausgerichtet und weiter transportiert. In der Stapelvorrichtung ( 2 ) werden zueinander gehörende Formate gestapelt und dann zum Hochkantsteller ( 3 ) befördert, wo sie vom Robotergreifarm ( 4 ) erfasst und weiter verarbeitet werden.

In der Figur ( 2 ) sind dieselben Vorrichtungen in der Draufsicht dargestellt, Augenfällig sind hier in der Stapelvorrichtung ( 2 ) die nicht näher bezeichneten kreisförmigen Lüfterrotoren die die Ansaugluft für die Ansaugkästen ( 18 ) erzeugen. Weitere Details sind in den folgenden Figuren beschrieben.

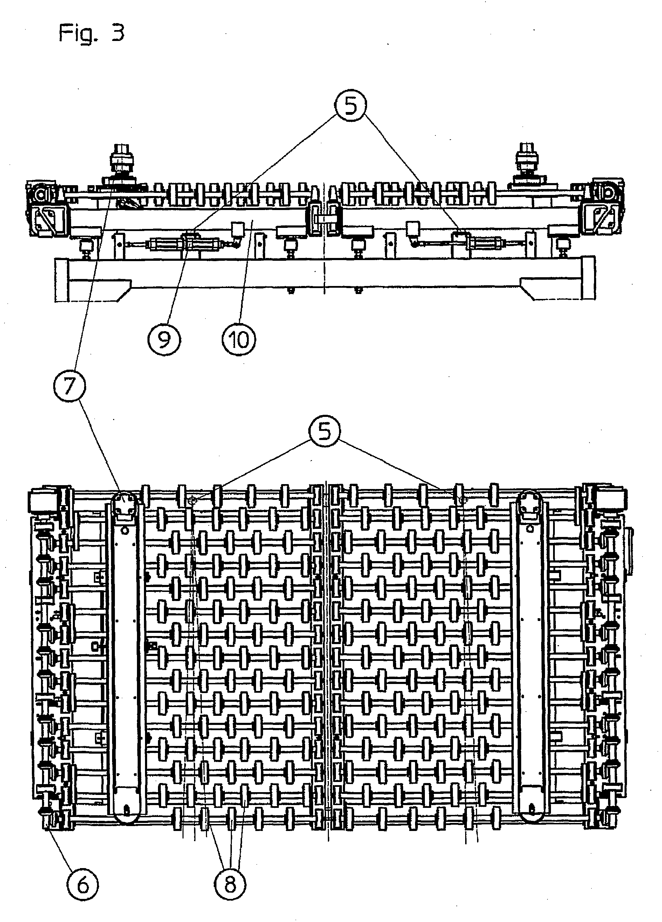

In der Figur 3 ist die Ausrichtvorrichtung ( 1 ) im Detail von oben und darunter im Querschnitt dargestellt.

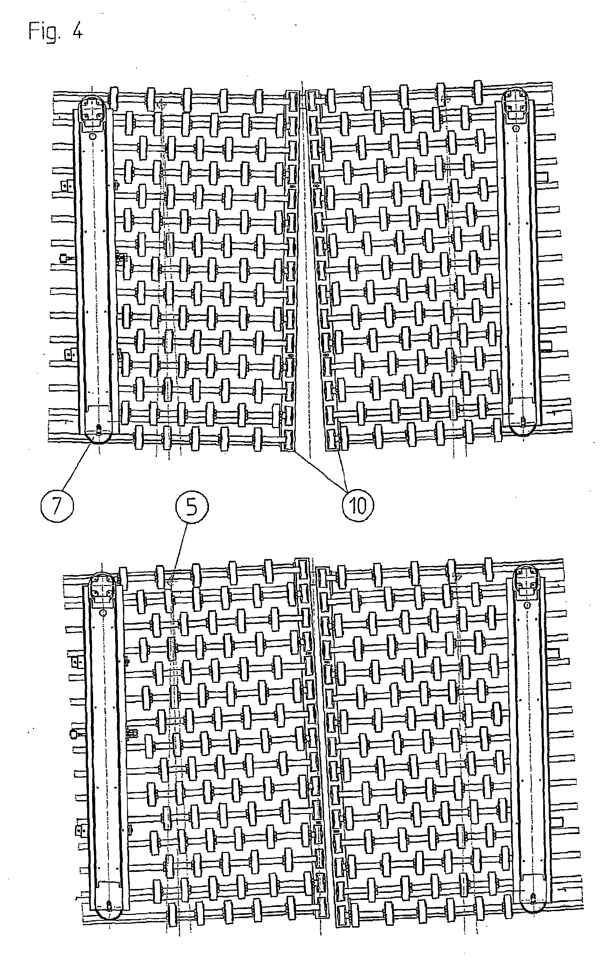

Die gesamte Ausrichtvorrichtung ( 1 ) ist in Längsrichtung in zwei unabhängig voneinander betreibbare Felder unterteilt. Hierbei sind die beiden Schwenklager ( 5 ) zu erkennen, um die das jeweilige Feld geschwenkt werden kann. Die einzelnen Rollen ( 8 ) sind in den Rollenträgern ( 10 ), wie auch aus der Figur 4 zu ersehen ist, gelagert. Der Antrieb ( 6 ) der Transportrollen ( 8 ) erfolgt von den jeweiligen Außenseiten her über einen gemeinsamen Antrieb. Für besondere Steuerungsaufgaben kann auch eine Antriebssteuerung gewählt werden die eine unabhängige Antriebssteuerung für jede Achse der Transportrollen ermöglicht. Mit geteilten Antriebsachsen, die weitere Antriebsmöglichkeiten bieten, können zusätzlich kleinere Gruppen von Transportrollen ( 8 ) unabhängig voneinander angetrieben werden.

In der Figur 4 sind die beiden grundsätzlich verschiedenen Möglichkeiten gezeigt, die sich bieten wenn die beiden Felder der Ausrichtvorrichtung ( 1 ) parallel miteinander verschwenkt werden oder, zum Beispiel bei der Ausrichtung von kleineren Formaten, getrennt Glasplatten an dem jeweiligen Anschlagband ( 7 ) ausgerichtet werden.

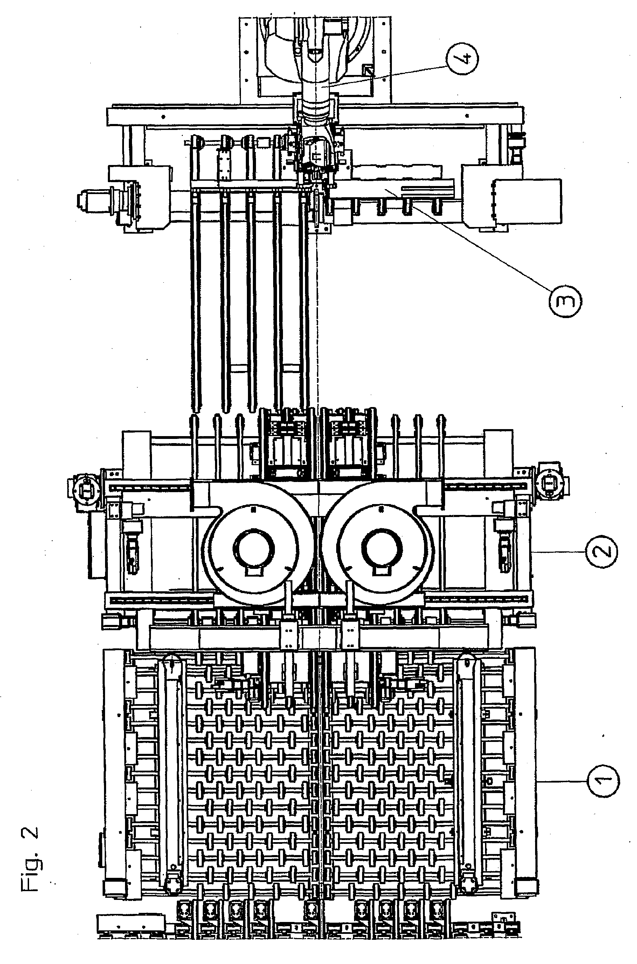

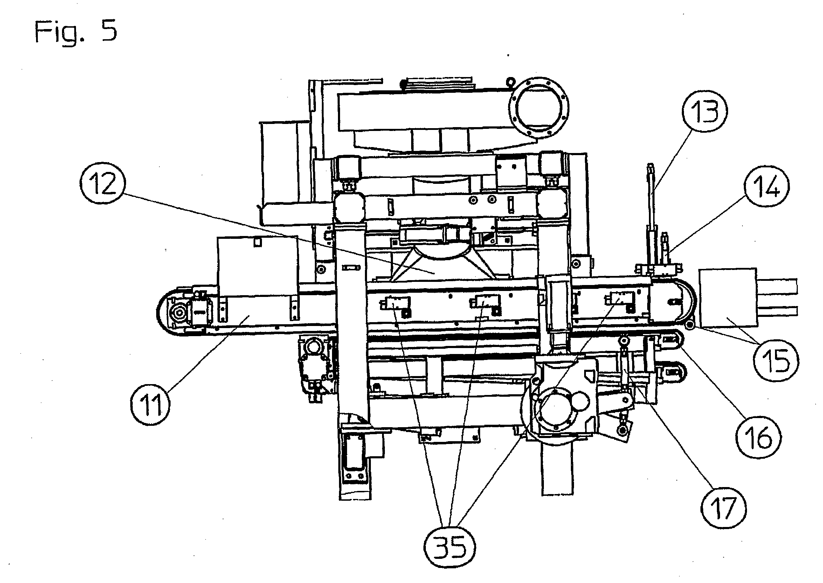

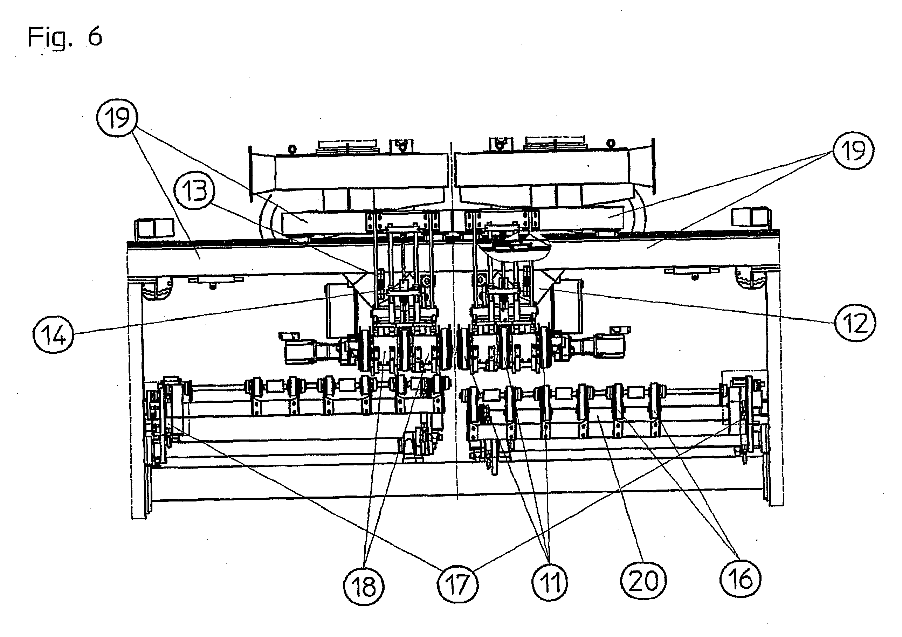

Die in der Figur 5 im Schnitt in Längsrichtung dargestellte Stapelvorrichtung ( 2 ) zeigt auf der linken Seite das, in diesem Querschnitt wie ein breiter Finger sich darstellende, Saugeinrichtungs - Transportband ( 11 ). Dieses Transportband ( 11 ) ist in der Figur 2, in der die einzelnen Anlagenteile von oben gezeigt sind, ebenfalls daran zu erkennen, dass es in der Mitte in die Ausrichtvorrichtung ( 1 ) hineinragt. Das Transportband ( 11 ) besteht aus zwei Teilen die beide unabhängig voneinander jeweils durch eine Verschiebeeinheit ( 19 ) über die jeweilige Hälfte der Ausrichtvorrichtung ( 1 ) verfahren werden können. Diese beiden Teile des Saugeinrichtungs - Transportbands ( 11 ) nehmen auf ihrer Unterseite durch die Ansaugwirkung einer Unterdruckanlage die auf der Ausrichtvorrichtung ( 1 ) ausgerichteten Glasplatten in den unterschiedlichen Formaten auf und führen diese bis zur Stapelhalteeinrichtung ( 13 ).Eine spezielle Riffelung an der Unterseite der Transportbänder ( 11 ) sorgt dafür, dass sich die Glasplatten nicht verschieben können. Die beiden Verschiebeeinheiten ( 19 ) für die Saugtransporteinrichtung die die Saugeinrichtungs - Transportbänder ( 11 ) quer zur Laufrichtung der Kaltlinie verschieben können, sind aus der Figur 6 zu ersehen.

Diese Verschiebung findet in Abhängigkeit vom Format der jeweils zu stapelnden Glasplatten statt. In der Figur 5 ist ein Unterdrucksaugkanal ( 12 ), in Längsrichtung verlaufend, im Querschnitt gezeichnet. Die Bewegung der angesaugten und auf dem Transportband ( 11 ) weiter beförderten Glasplatten wird über die Sensoren ( 35 ) überwacht und deren Ausgangssignale werden zur Steuerung der Beförderung der Glasplatten ausgewertet.

Durch die Plattenabdruckvorrichtung ( 14 ) werden die Glasplatten am Ende des Transportbandes ( 11 ) auf das Stapelband ( 16 ) abgesenkt,
Da in Ländern mit hoher Luftfeuchtigkeit das, normalerweise zwischen den einzelnen Glasplatten als Trennmedium eingebrachte, Luzite - Pulver verklumpt und seinen Zweck demzufolge nicht erfüllen kann, ist erfindungsgemäß vorgesehen, an dieser Stelle zwischen zwei Glasplatten alternativ eine Lage Papier einzulegen.

Dieser Vorgang wird durch die, nicht näher detailliert gezeichnete und beschriebene Papiereinlegevorrichtung ( 15 ) bewirkt. Vorbilder hierzu gibt es aus der Technik der Papierverarbeitung.

Das Stapelband ( 16 ) lässt sich nicht nur entsprechend der zunehmenden Dicke eines geordneten Glasstapels horizontal absenken, sondern auch über den Schwenkzylinder ( 17 ) zu einer schrägen Ebene umfunktionieren. Diese schräge Ebene weist dieselbe Neigung auf wie der Transportarm ( 27 ) für den Hochkantaufsteller ( 3 ).

Die Stapelhalteeinrichtung ( 13 ) und die Plattenabdruckvorrichtung ( 14 ) sind auch in der Figur 6, die die Stapeleinrichtung ( 2 ) im Schnitt zeigt, zu erkennen.

Ebenso sind die Unterdruckansaugkanäle ( 12 ) in der Figur 5 im Schnitt der Figur 6 dargestellt. Neben dem bekannten Schwenkzylinder ( 17 ) für das Stapelband und den Ansaugkästen in einer anderen Ansicht, ist in der Figur 6 der Schwenkarm ( 20 ) für das Stapelband zu sehen. Außerdem sind jeweils die beiden Verschiebeeinrichtungen ( 19 ) für die Saugtransporteinrichtung im oberen Bereich der Figur 6 dargestellt.

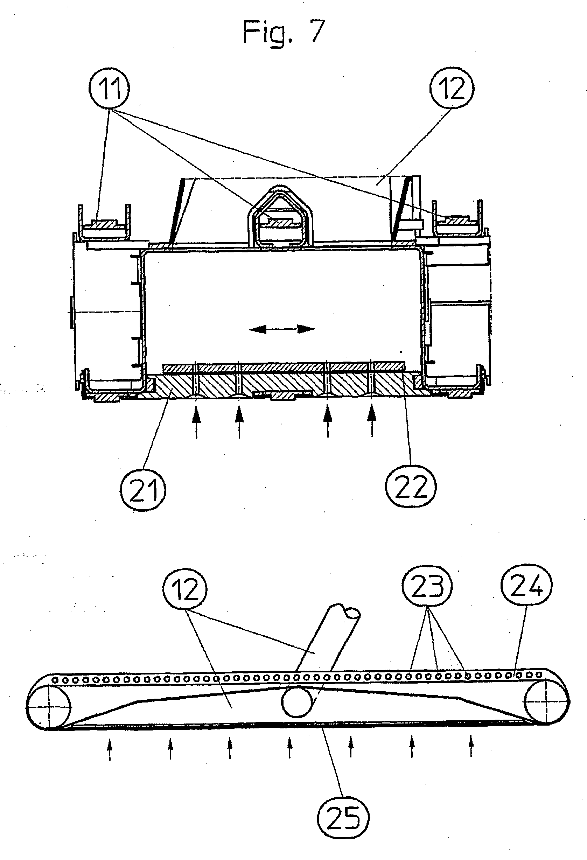

In der Figur 7 ist das Saugeinrichtungs - Transportband ( 11 ) mit den Ansaugflächenelementen ( 21 ) und den Sperrschiebern ( 22 ) für eine Saugstromunterbrechung gesondert herausgezeichnet. Durch den Unterdruckansaugkanal ( 12 ) wird hierbei Luft angesaugt und über die Ansaugflächenelemente ( 21 ) die jeweilige Glasplatte an die Transportrollen ( 11 ) angesaugt. Die Sperrschieber ( 22 ) für die Saugstromunterbrechung dienen hierbei der Absenkung der Glasplatten durch die, partiell gesteuerte, oder gesamte Unterbrechung des Unterdrucks.

Da bei diesem aufgezeigten Ansaugvorgang durch die unvermeidliche Falschluft Energie vergeudet wird, wird im unteren Teil der Figur 7 eine andere Bauart der Ansaugvorrichtung vorgestellt, die weniger Energie verbraucht.

Hierbei wird die Ansaugluft direkt durch Saugöffnungen ( 23 ) in den Saugtransportbändern ( 24 ) geleitet. Die Saugluft wird extern zentral erzeugt und durch die Saugstromsteuerung ( 25 ) über gesonderte Luftschläuche auf die Saugöffnungen ( 23 ) verteilt. Bei dieser Lösung sind zudem die Saugtransportbänder ( 23 ) einzeln ansteuerbar und hinsichtlich ihrer Saugleitung regelbar.

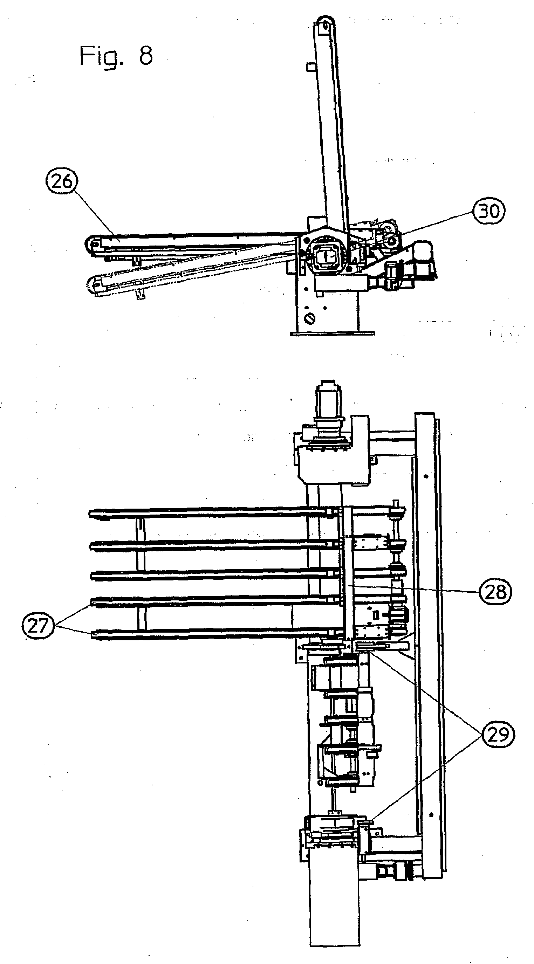

In der Figur 8 ist der Hochkantsteller ( 3 ) im oberen Teil in der Draufsicht und im unteren Teil im Querschnitt dargestellt.

Über den Transportarm ( 26 ), bzw. die zugehörigen Transportbänder ( 27 ), werden die Glasstapel von der Stapelvorrichtung ( 2 ) übernommen, wie aus der Querschnittsdarstellung der Figur 1 zu entnehmen ist.

Die Neigung des Stapelbandes ( 16 ) entspricht hierbei der Neigung des Transportarms ( 26 ).

In der Mitte des Hochkantstellers ( 3 ) befindet sich ein fingerartiger Stellhebel der Teil der Vertikal - Ausrichteinrichtung ( 29 ) für den Hochkantsteller ( 3 ) ist und den jeweiligen Glasstapel von der Mitte aus gegen den jeweiligen Anschlag links oder rechts drückt, wobei bei diesem Vorgang über die Sensoren der Vorlauflinie Informationen darüber vorliegen und berücksichtigt werden welche Abmessungen der jeweilige Stapel hat. Sensoren in den jeweiligen Endpositionen des Hochkantstellerrs ( 3 ) dienen der Kontrolle des gesamten Ausrichtvorgangs. Die Glasstapel - Anschlagleiste ( 28 ) begrenzt den Transport des vorher in der Stapelvorrichtung ( 2 ) schon ausgerichteten Glasstapels, der als Abschluss des Fixierungsvorgangs vom Antrieb ( 30 ) hochkant gestellt wird.

Da das so ausgerichtete Paket der aufeinander geschichteten Glasplatten nicht nur horizontal sondern auch vertikal bündig ausgerichtet ist, kann es, je nach den Gegebenheiten des Formats der Glasplatten von dem Robotergreifarm ( 4 ) von oben oder von der jeweiligen Seite aus ergriffen und weitertransportiert werden.

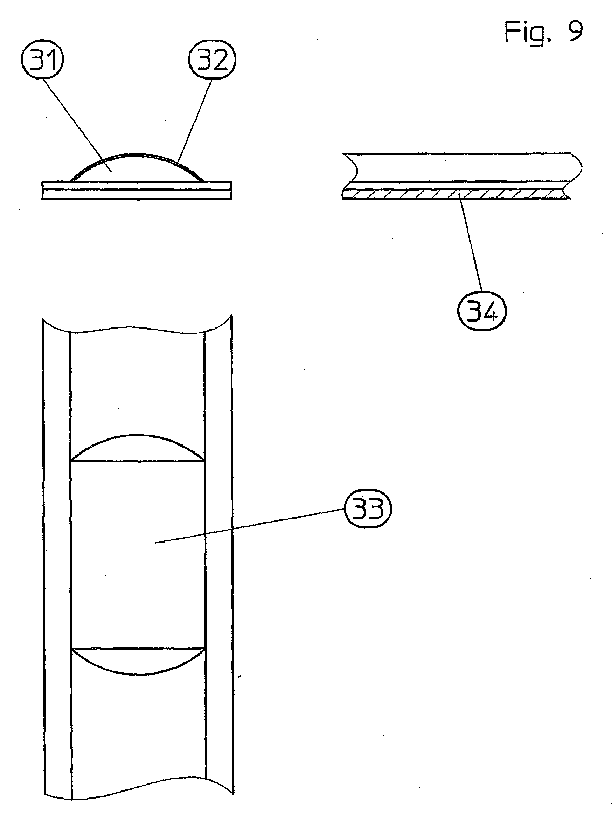

In der Figur 9 sind Details des Hochkantstellers ( 4 ) bezüglich der Ausgestaltung des, bzw. der Transportbänder ( 27 ), dargestellt.

Das jeweilige Transportband hat demzufolge eine wulstförmige Auflage ( 31 ), die selbst wieder eine Gleitbeschichtung ( 32 ) aufweist. Der Antrieb eines solchen Transportbandes erfolgt auf der Unterseite über Antriebsräder mit einer gezackten Oberfläche die wiederum in Eingriff stehen mit entsprechenden Zacken an der Unterseite ( 34 ) des Transportbandes.

In der Auflage ( 31 ) jedes Transportbandes befindet sich eine Aussparung ( 33 ) die ermöglicht dass der fingerartige Stellhebel der Verschiebeeinheit der Vertikal - Ausrichteinrichtung ( 29 ) durch die Auflage ( 31 ) des Transportbandes nicht behindert wird.

### Bezuaszeichenliste

- ( 1 ): Ausrichtvorrichtung
- ( 2 ): Stapelvorrichtung
- ( 3 ): Hochkantsteller
- ( 4 ): Robotergreifarm
- ( 5 ): Schwenklager für Rollenträger
- ( 6 ): Antrieb von Transportrollen
- ( 7 ): Anschlagband
- ( 8 ): Transportrollen
- ( 9 ): Verschiebeeinrichtung für Rollenträger
- ( 10 ): Rahmen - Rollenträger
- ( 11 ): Saügeinrichtungs - Transportband
- ( 12 ): Unterdruckansaugkanal
- ( 13 ): Stapelhalteeinrichtung ( Rolle)
- (14): Plattenabdruckvorrichtung
- ( 15 ): Papiereinlegevorrichtung
- ( 16 ): Stapelband
- ( 17 ): Schwenkzylinder für Stapelband
- ( 18 ): Ansaugkästen
- ( 19 ): Verschiebeeinheit für Saugtransporteinrchtung
- ( 20 ): Schwenkarm für Stapelband
- ( 21 ): Ansaugflächenelemente
- ( 22 ): Sperrschieber für Saugstromunterbrechung
- ( 23 ): Saugöffnungen
- ( 24 ): Saugtransportband
- ( 25 ): Saugstromsteuerung
- ( 26 ): Transportarm für den Hochkantsteller
- ( 27 ): Transportband für den Hochkantsteller
- ( 28 ): Glasstapel - Anschlagleiste
- ( 29 ): Vertikal- Ausrichteinrichtung für den Glasstapel
- ( 30 ): Antrieb für die Schwenkeinrichtung des Transportarms
- ( 31 ): Auflage des Transportbands
- ( 32 ): Gleitbeschichtung
- ( 33 ): Aussparung für die Verschiebeeinheit
- ( 34 ): Unterseite des Transportbands
- ( 35 ): Sensoren

## Patentansprüche

1. Vorrichtung zum Ordnen und Stapeln von Glasplatten unterschiedlicher Dicke und / oder unterschiedlichen Formats über eine Förderlinie, mit einer Ausrichtvorrichtung (1),
einer Stapelvorrichtung (2), die die von der Ausrichtvorrichtung (1) jeweils gelieferten Platten absenkt und die folgenden Platten darauf stapelt,
wobei ein Saugeinrichtungs - Transportband (11) die Glasplatten weiterbefördert,
einem Hochkantsteller (3) und
einem Robotergreifarm (4), der die auf dem Hochkantsteller (3) ausgerichteten Glasplatten erfasst und der weiteren Verwendung zuführt,
**dadurch gekennzeichnet, dass**
1) die Förderlinie zweigeteilt ist,
2) die Ausrichtvorrichtung (1), die über steuerbare Rollen (8) die Glasplatten an einem linken und /oder einem rechten Anschlagband (7) ausrichtet, aus zwei, jeweils gesondert um ein Schwenklager (5) drehbaren, Rahmen - Rollenträgern (10) besteht,
3) die Stapelvorrichtung (2)die Glasplatten auf einem Stapelband (16) ablegt und das Stapelband (16) mittels eines Schwenkzylinders (17) quer zur Förderlinie schwenkbar ist,
4) der Hochkantsteller (3) die gestapelten Platten im rechten Winkel dreht und an einer Vertikal-Ausrichteinrichtung (29) ausrichtet,
5) ein Transportarm (26) über einen Antrieb (30) derart schwenkbar ist, dass Bruchglas automatisch entsorgt wird.

2. Vorrichtung nach Anspruch 1,
**dadurch gekennzeichnet,**
**dass** eine zuschaltbare Papiereinlegevorrichtung (15) vorgesehen ist, die bei hoher Luftfeuchtigkeit aus einem Magazin entnommenes Papier jeweils auf eine in der Stapelvorrichtung (2) abgesenkte Platte legt.

3. Vorrichtung nach Anspruch 1 oder Anspruch 2,
**dadurch gekennzeichnet,**
**dass** die Rahmen - Rollenträger (10) synchron oder separat drehbar sind.

4. Vorrichtung nach einem der Ansprüche 1 bis 3,
**dadurch gekennzeichnet,**
**dass** die Transportrollen eines Rahmen - Rollenträgers (10) in Gruppen oder gemeinsam steuerbar sind.

5. Vorrichtung nach einem der Ansprüche 1 bis 4,
**dadurch gekennzeichnet,**
**dass** das linke und / oder das rechte Anschlagband (7) um eine Achse drehbar und / oder parallel verschiebbar ist.

6. Vorrichtung nach einem der Ansprüche 1 bis 5,
**dadurch gekennzeichnet,**
**dass** in der Stapelvorrichtung (2) die Saugeinrichtungs - Transportbänder (11) mittels Verschiebeeinheiten (19) horizontal verschiebbar sind.

7. Vorrichtung nach einem der Ansprüche 1 bis 6,
**dadurch gekennzeichnet,**
**dass** in der Stapelvorrichtung (2) die Glasplatten über Ansaugflächenelemente (21) durch Unterdruck an die Transportbänder (11) angesaugt werden.

8. Vorrichtung nach einem der Ansprüche 1 bis 7,
**dadurch gekennzeichnet,**
**dass** in der Stapelvorrichtung (2) die Glasplatten über Saugöffnungen (23), die jeweils in den Saugtransportbändern (24) eingelassen sind, durch Unterdruck an die Saugtransportbänder (24) angesaugt werden.

9. Vorrichtung nach Anspruch 8,
**dadurch gekennzeichnet,**
**dass** die Saugtransportbänder (23) hinsichtlich ihrer Ansaugleistung einzeln steuerbar und regelbar sind.

10. Vorrichtung nach einem der Ansprüche 1 bis 9,
**dadurch gekennzeichnet,**
**dass**, zu Beginn der Kaltlinie und / oder am Ende des Stapelprozesses in der Stapelvorrichtung (2), Bruchglas sensorisch erfasst und aussortiert wird.

11. Vorrichtung nach einem der Ansprüche 1 bis 10,
**dadurch gekennzeichnet,**
**dass** im Hochkantsteller (3) die erfassten Glasplatten nicht nur horizontal sondern auch vertikal bündig gelagert werden, sodass sie von einem Robotergreifarm (4) sowohl von oben als auch von der Seite erfasst werden können.

12. Vorrichtung nach einem der Ansprüche 1 bis 11,
**dadurch gekennzeichnet,**
**dass** alle relevanten Funktionen und Betriebszustände der Vorrichtung durch jeweils geeignete Sensoren überwacht und deren Ausgangssignale zur Steuerung des reibungslosen Betriebsablaufs herangezogen werden.

13. Verfahren zum Ordnen und Stapeln von Glasplatten unterschiedlicher Dicke und / oder unterschiedlichen Formats über eine Förderlinie, wobei die Glasplatten verschiedene Verfahrensstufen in der Reihenfolge der Bearbeitung über eine Ausrichtvorrichtung (1),
eine Stapelvorrichtung (2), die die von der Ausrichtvorrichtung (1) jeweils gelieferten Platten absenkt und die folgenden Platten darauf stapelt, wobei ein Saugeinrichtungs - Transportband (11) die Glasplatten weiterbefördert,
einen Hochkantsteller (3), und
einen Robotergreifarm (4), der die ausgerichteten Glasplatten auf dem Hochkantsteller (3) erfasst und
der weiteren Verwendung zuführt, durchlaufen,
**dadurch gekennzeichnet, dass**
1) die Förderlinie zweigeteilt ist,
2) die Glasplatten zuerst in der Ausrichtvorrichtung (1), die über steuerbare Rollen (8) die Glasplatten an einem linken und / oder einem rechten Anschlagband (7) ausrichtet, geordnet werden, wobei die Ausrichtvorrichtung (1) aus zwei, jeweils gesondert um ein Schwenklager (5) drehbaren, Rahmen - Rollenträgern (10) besteht,
3) die Glasplatten in der folgenden Stapelvorrichtung (2)gestapelt werden, wobei das Saugeinrichtungs - Transportband (11) die Glasplatten auf einem Stapelband (16) ablegt und das Stapelband (16) mittels eines Schwenkzylinders (17) quer zur Förderlinie schwenkbar ist,
4) in dem folgenden Hochkantsteller (3) die gestapelten Glasplatten im rechten Winkel gedreht und an einer Vertikal-Ausrichteinrichtung (29) ausgerichtet werden,
5) ein Transportarm (26) des Hochkantstellers (3) über einen Antrieb (30) derart schwenkbar ist, dass Bruchglas automatisch entsorgt wird.

14. Verfahren nach Anspruch 13,
**dadurch gekennzeichnet,**
**dass** bei hoher Luftfeuchtigkeit aus einer zuschaltbaren Papiereinlegevorrichtung (15) aus einem Magazin entnommenes Papier jeweils auf eine in der Stapelvorrichtung (2) abgesenkte Platte gelegt wird.

## Claims

1. Device for sorting and stacking glass plates of different thicknesses and/or different formats over a conveying line, said device comprising an orienting device (1),
a stacking device (2) which lowers the plates respectively supplied by the orienting device (1) and stacks the following plates thereon, wherein a suction device conveyor belt (11) conveys the glass plates further,
an upright positioner (3) and
a robot gripping arm (4) which grips the glass plates oriented on the upright positioner (3) and transports them on for further use,
**characterized in that**
1) the conveying line is divided in two,
2) the orienting device (1) which orients the glass plates with respect to a left-hand and/or a right-hand abutment strip (7) via controllable rollers (8) comprises two frame roller carriers (10) which can each be rotated separately about a pivot bearing (5),
3) the stacking device (2) places the glass plates on a stack belt (16), and the stack belt (16) can be pivoted transversely with respect to the conveying line by means of a pivoting cylinder (17),
4) the upright positioner (3) rotates the stacked plates at a right angle and orients them on a vertical orienting device (29),
5) a transport arm (26) can be pivoted via a drive (30) such that broken glass is automatically disposed of.

2. Device according to Claim 1,
**characterized**
**in that** provision is made of a connectable paper insertion device (15) which, when there is high atmospheric humidity, places paper taken from a store in each case onto a plate lowered in the stacking device (2).

3. Device according to Claim 1 or Claim 2,
**characterized**
**in that** the frame roller carriers (10) can be rotated synchronously or separately.

4. Device according to one of Claims 1 to 3,
**characterized**
**in that** the transport rollers of a frame roller carrier (10) can be controlled in groups or together.

5. Device according to one of Claims 1 to 4,
**characterized**
**in that** the left-hand and/or the right-hand abutment strip (7) can be rotated about an axis and/or can be displaced in parallel.

6. Device according to one of Claims 1 to 5,
**characterized**
**in that** the suction device conveyor belts (11) can be displaced horizontally in the stacking device (2) by means of displacement units (19).

7. Device according to one of Claims 1 to 6,
**characterized**
**in that** the glass plates are sucked onto the conveyor belts (11) by a vacuum in the stacking device (2) via intake surface elements (21).

8. Device according to one of Claims 1 to 7,
**characterized**
**in that** the glass plates are sucked onto the suction conveyor belts (24) by a vacuum in the stacking device (2) via suction openings (23) each incorporated in the suction conveyor belts (24).

9. Device according to Claim 8,
**characterized**
**in that** the suction conveyor belts (24) can be individually subjected to open-loop and closed-loop control with respect to their intake power.

10. Device according to one of Claims 1 to 9,
**characterized**
**in that** broken glass is detected by means of sensors and removed at the start of the cooling line and/or at the end of the stacking process in the stacking device (2).

11. Device according to one of Claims 1 to 10,
**characterized**
**in that** the glass plates detected are mounted in the upright positioner (3) not only horizontally but also vertically flush, such that they can be gripped by a robot gripping arm (4) both from above and also from the side.

12. Device according to one of Claims 1 to 11,
**characterized**
**in that** all the relevant functions and operating states of the device are monitored by respectively suitable sensors and the output signals from these sensors are used to control the frictionless operating sequence.

13. Method for sorting and stacking glass plates of different thicknesses and/or different formats over a conveying line, wherein the glass plates pass through various method stages in the processing sequence via
an orienting device (1),
a stacking device (2) which lowers the plates respectively supplied by the orienting device (1) and stacks the following plates thereon, wherein a suction device conveyor belt (11) conveys the glass plates further,
an upright positioner (3), and
a robot gripping arm (4) which grips the oriented glass plates on the upright positioner (3) and transports them on for further use, **characterized in that**
1) the conveying line is divided in two,
2) the glass plates are first sorted in the orienting device (1) which orients the glass plates with respect to a left-hand and/or a right-hand abutment strip (7) via controllable rollers (8), wherein the orienting device (1) comprises two frame roller carriers (10) which can each be rotated separately about a pivot bearing (5),
3) the glass plates are stacked in the following stacking device (2), wherein the suction device conveyor belt (11) places the glass plates on a stack belt (16), and the stack belt (16) can be pivoted transversely with respect to the conveying line by means of a pivoting cylinder (17),
4) the stacked glass plates are rotated at a right angle and oriented on a vertical orienting device (29) in the following upright positioner (3),
5) a transport arm (26) of the upright positioner (3) can be pivoted via a drive (30) such that broken glass is automatically disposed of.

14. Method according to Claim 13,
**characterized**
**in that**, when there is high atmospheric humidity, paper taken from a store is in each case placed onto a plate lowered in the stacking device (2) from a connectable paper insertion device (15).

## Revendications

1. Dispositif pour le classement et l'empilage de plaques de verre de différentes épaisseurs et/ou de différents formats, par une ligne de transport, avec un dispositif d'orientation (1),
un dispositif d'empilage (2) abaissant la plaque livrée par le dispositif d'orientation (1) et empilant la plaque suivante sur celle-ci, dans lequel un convoyeur de système d'aspiration (11) continue de faire avancer les plaques de verre,
un organe de réglage de chant (3) et
un bras de préhension de robot (4), destiné à saisir les plaques de verre orientées sur l'organe de réglage de chant (3) et à les acheminer vers les étapes suivantes,
**caractérisé en ce que**
1) la ligne de transport est divisée en deux,
2) le dispositif d'orientation (1), orientant les plaques de verre par rapport à une bande de butée (7) de gauche et/ou de droite, à l'aide de rouleaux commandables (8), est constitué de deux supports de rouleau de cadre (10), respectivement rotatifs autour d'un palier de pivotement (5),
3) le dispositif d'empilage (2) dépose les plaques de verre sur une bande d'empilage (16) et la bande d'empilage (16) peut être pivotée transversalement à la ligne de transport, au moyen d'un cylindre de pivotement (17),
4) l'organe de réglage de chant (3) fait tourner en angle droit les plaques de verre empilées et les oriente sur un système d'orientation verticale (29),
5) un bras de transport (26) peut être pivoté par un entraînement (30), de manière à évacuer automatiquement les débris de verre.

2. Dispositif selon la revendication 1,
**caractérisé en ce**
**qu'**il est prévu un dispositif d'insertion de papier (15) raccordable, posant un papier prélevé d'un magazine sur chacune des plaques abaissées dans le dispositif d'empilage (2), en cas de forte humidité de l'air.

3. Dispositif selon la revendication 1 ou 2,
**caractérisé en ce que**
les supports de rouleau de cadre (10) peuvent être mis en rotation de façon synchrone ou séparément.

4. Dispositif selon l'une des revendications 1 à 3,
**caractérisé en ce que**
les rouleaux de transport d'un support de rouleau de cadre (10) peuvent être commandés par groupes ou ensemble.

5. Dispositif selon l'une des revendications 1 à 4,
**caractérisé en ce que**
la bande de butée de gauche et/ou de droite (7) est rotative autour d'un axe et/ou déplaçable parallèlement.

6. Dispositif selon l'une des revendications 1 à 5,
**caractérisé en ce que**
dans le dispositif d'empilage (2), les convoyeurs (11) du système d'aspiration sont déplaçables au moyen d'unités de déplacement (19).

7. Dispositif selon l'une des revendications 1 à 6,
**caractérisé en ce que**
dans le dispositif d'empilage (2), les plaques de verre sont aspirées au moyen d'éléments de surface d'aspiration (21), en soumettant les convoyeurs (11) à une dépression.

8. Dispositif selon l'une des revendications 1 à 7,
**caractérisé en ce que**
dans le dispositif d'empilage (2), les plaques de verre sont aspirées au moyen d'ouvertures d'aspiration (23) prévues respectivement dans les convoyeurs aspirants (24), en soumettant les convoyeurs aspirants (24) à une dépression.

9. Dispositif selon la revendication 8,
**caractérisé en ce que**
les convoyeurs aspirants (24) peuvent être commandés ou réglés séparément quant à leur puissance d'aspiration.

10. Dispositif selon l'une des revendications 1 à 9,
**caractérisé en ce que**
au début de la ligne froide et/ou à la fin de l'opération d'empilage dans le dispositif d'empilage (2), les débris de verre sont détectés par capteur et triés.

11. Dispositif selon l'une des revendications 1 à 10,
**caractérisé en ce que**
dans l'organe de réglage de chant (3), les plaques de verre saisies sont disposées par groupes, non seulement horizontalement mais aussi verticalement, de sorte qu'elles peuvent être saisies aussi bien par le haut que par le côté.

12. Dispositif selon l'une des revendications 1 à 11,
**caractérisé en ce que**
toutes les fonctions et tous les états de fonctionnement déterminants du dispositif sont surveillés respectivement par des capteurs appropriés, et leurs signaux de sortie sont utilisés pour commander le bon déroulement des opérations.

13. Procédé pour le classement et l'empilage de plaques de verre de différentes épaisseurs et/ou de différents formats, par une ligne de transport, dans lequel les plaques de verre passent par plusieurs étapes de procédé, dans l'ordre du traitement, par
un dispositif d'orientation (1),
un dispositif d'empilage (2) abaissant la plaque livrée par le dispositif d'orientation (1) et empilant la plaque suivante sur celle-ci, dans lequel un convoyeur de système d'aspiration (11) continue de faire avancer les plaques de verre,
un organe de réglage de chant (3) et
un bras de préhension de robot (4), destiné à saisir les plaques de verre orientées sur l'organe de réglage de chant (3) et à les acheminer vers les étapes suivantes,
**caractérisé en ce que**
1) la ligne de transport est divisée en deux,
2) les plaques de verre sont tout d'abord classées dans le dispositif d'orientation (1), orientant les plaques de verre par rapport à une bande de butée (7) de gauche et/ou de droite, par des rouleaux commandables (8), le dispositif d'orientation (1) étant constitué de deux supports de rouleau de cadre (10), respectivement rotatifs autour d'un palier de pivotement (5),
3) les plaques de verre sont empilées dans le dispositif d'empilage (2) suivant, le convoyeur de système d'aspiration (11) déposant les plaques de verre sur une bande d'empilage (16), et la bande d'empilage (16) pouvant être pivotée transversalement à la ligne de transport, au moyen d'un cylindre de pivotement (17),
4) dans l'organe de réglage de chant (3) consécutif, les plaques de verre empilées sont tournées en angle droit et orientées sur un système d'orientation verticale (29),
5) un bras de transport (26) de l'organe de réglage de chant (3) peut être pivoté par un entraînement (30), de manière à évacuer automatiquement les débris de verre.

14. Procédé selon la revendication 13,
**caractérisé en ce que**
en cas de forte humidité de l'air, un papier prélevé à partir d'un magazine est déposé respectivement sur chacune des plaques abaissées dans le dispositif d'empilage (2), par un dispositif d'insertion de papier (15) raccordable.
